# EUROPEAN PATENT APPLICATION

(11) **EP 4 557 392 A1**
(43) Date of publication of application: **21.05.2025**
(21) Application number: 23915698.7
(22) Date of filing: 09.11.2023
(51) Int. Cl.: H01M 4/13, H01M 4/139, H01M 4/04, H01M 10/0525

(54) **NEGATIVE ELECTRODE SHEET, MANUFACTURING METHOD FOR NEGATIVE ELECTRODE SHEET, AND LITHIUM-ION BATTERY**

(30) Priority: 13.01.2023 CN 202310073885
(71) Applicant: Honor Device Co., Ltd., Shenzhen, Guangdong 518040 (CN)
(72) Inventor: YU, Zhihao, Shenzhen, Guangdong 518040 (CN); WU, Xia, Shenzhen, Guangdong 518040 (CN)
(74) Representative: MERH-IP Matias Erny Reichl Hoffmann Patentanwälte PartG mbB
(86) International application number: PCT/CN2023/130598
(87) International publication number: WO 2024/148940

(57) **Abstract**

This application provides a negative electrode plate, a method for preparing a negative electrode plate, and a lithium-ion battery. The negative electrode plate includes: a negative current collecting layer; and a lithiated binding layer, attached to an inner surface of the negative current collecting layer, where a lithiation degree of a side of the lithiated binding layer away from the inner surface is greater than a lithiation degree of a side of the lithiated binding layer close to the inner surface. According to the technical solutions in this application, the lithiated binding layer in the negative electrode plate has a conductive gradient and a binding gradient, which resolves the problem of detachment in a negative electrode plate with a conventional binder, increases a rate of battery kinetics, and increases initial coulombic efficiency of a lithium-ion battery, increasing capacity of the lithium-ion battery.

## Description

This application claims priority to Chinese Patent Application No. 202310073885.7, filed with the China National Intellectual Property Administration on January 13, 2023 and entitled "NEGATIVE ELECTRODE PLATE, METHOD FOR PREPARING NEGATIVE ELECTRODE PLATE, AND LITHIUM-ION BATTERY", which is incorporated herein by reference in its entirety.

### TECHNICAL FIELD

Embodiments of this application relate to the field of lithium-ion battery technologies, and in particular, to a negative electrode plate, a method for preparing a negative electrode plate, and a lithium-ion battery.

### BACKGROUND

With the development of lithium-ion batteries, a negative electrode plate of a lithium-ion battery has evolved from a carbon material to a silicon negative electrode material. The silicon negative electrode material has high capacity per gram, high volumetric specific capacity, appropriate lithium intercalation potentials, and low costs, which can increase energy density of the system of the lithium-ion battery. However, the silicon negative electrode material undergoes tremendous volume deformation during repeated deintercalation of lithium ions, causing the rupture of silicon particles and the collapse of the structure of the negative electrode plate, consequently resulting in a decrease in the capacity and cycle performance of the lithium-ion battery.

A binder can be used to stabilize the structure of the silicon negative electrode material. The binder needs to provide a good lithium-conducting capability, low ohmic resistance, and a strong binding capability. In this case, the lithium-ion battery does not undergo detachment and has an excellent capability of fast charging and discharging. However, a conventional binder reacts with lithium ions in an electrolyte, resulting in a decrease in the lithium-conducting capability and initial coulombic efficiency of the lithium-ion battery, while a lithiated binder can improve the lithium-conducting capability of the battery, but has a low binding capability, leading to detachment in the negative electrode plate. Therefore, the negative electrode plate with the conventional binder cannot have both a good lithium-conducting capability and a strong binding capability.

### SUMMARY

Embodiments of this application provide a negative electrode plate, a method for preparing a negative electrode plate, and a lithium-ion battery, which can resolve the problem of detachment in a negative electrode plate with a conventional binder, and increase initial coulombic efficiency of a lithium-ion battery, increasing capacity of the lithium-ion battery.

According to a first aspect, this application provides a negative electrode plate, including: a negative current collecting layer; and a lithiated binding layer, attached to an inner surface of the negative current collecting layer, where a lithiation degree of a side of the lithiated binding layer away from the inner surface is greater than a lithiation degree of a side of the lithiated binding layer close to the inner surface.

The lithiated binding layer in the negative electrode plate according to this application has a conductive gradient and a binding gradient through a gradient distribution of lithiation degrees in the lithiated binding layer. In this case, an adhesive force between the lithiated binding layer and the negative current collecting layer is increased, which can resolve the problem of detachment in the negative electrode plate, and a lithium-conducting capability of the surface of the lithiated binding layer is improved, and a rate of interface kinetics is increased, which can resolve the problem of a decrease in initial coulombic efficiency, thereby promoting an increase in energy density of a lithium-ion battery.

In an implementation, a lithiation degree of the lithiated binding layer increases gradually in the direction of moving away from the inner surface; and the lithiated binding layer is obtained based on an electric-field inductive effect. By using this implementation, the lithiation degree of the lithiated binding layer increases gradually in the direction of moving away from the inner surface based on the electric-field inductive effect, so that the lithiated binding layer in the negative electrode plate has a conductive gradient and a binding gradient. In this case, an adhesive force between the lithiated binding layer and the negative current collecting layer is increased, which can resolve the problem of detachment in the negative electrode plate, and a lithium-conducting capability of the surface of the lithiated binding layer is improved, which can resolve the problem of a decrease in initial coulombic efficiency, thereby promoting an increase in energy density of a lithium-ion battery.

In an implementation, the lithiated binding layer includes a first binding layer close to the inner surface and a second binding layer away from the inner surface; and a lithiation degree of the first binding layer is less than a lithiation degree of the second binding layer, and the first binding layer and the second binding layer are obtained sequentially through coating on the inner surface of the negative current collecting layer. By using this implementation, the lithiated binding layer has a conductive gradient and a binding gradient through layered coating. In this case, an adhesive force between the lithiated binding layer and the negative current collecting layer is increased, which can resolve the problem of detachment in the negative electrode plate, and a lithium-conducting capability of the surface of the lithiated binding layer is improved, which can resolve the problem of a decrease in initial coulombic efficiency, thereby promoting an increase in energy density of a lithium-ion battery.

In an implementation, the first binding layer has a first thickness, the second binding layer has a second thickness, the second thickness and the first thickness have a first ratio, and the first ratio is greater than or equal to 0.2 and less than or equal to 5. By using this implementation, the lithiated binding layer formed in this ratio has an appropriate conductive gradient and binding gradient.

In an implementation, the lithiation degree of the first binding layer is greater than or equal to 0. By using this implementation, the first binding layer may be an unlithiated binder or a partially lithiated binder. In this case, the formed lithiated binding layer has an appropriate conductive gradient and binding gradient.

In an implementation, lithium-ion conductivity of the side of the lithiated binding layer away from the inner surface is greater than lithium-ion conductivity of the side of the lithiated binding layer close to the inner surface. By using this implementation, the formed lithiated binding layer has an appropriate conductive gradient.

In an implementation, an adhesive force of the side of the lithiated binding layer away from the inner surface is less than an adhesive force of the side of the lithiated binding layer close to the inner surface. By using this implementation, the formed lithiated binding layer has an appropriate binding gradient.

According to a second aspect, this application provides a method for preparing a negative electrode plate, including: coating an inner surface of a negative current collecting layer with a lithiated binding layer to obtain the negative electrode plate, where a lithiation degree of a side of the lithiated binding layer away from the inner surface is greater than a lithiation degree of a side of the lithiated binding layer close to the inner surface.

By using the method for preparing the negative electrode plate in this application, the lithiated binding layer in the negative electrode plate has a conductive gradient and a binding gradient through a gradient distribution of lithiation degrees in the lithiated binding layer. In this case, an adhesive force between the lithiated binding layer and the negative current collecting layer is increased, which can resolve the problem of detachment in the negative electrode plate, and a lithium-conducting capability of the surface of the lithiated binding layer is improved, which can resolve the problem of a decrease in initial coulombic efficiency, thereby promoting an increase in energy density of a lithium-ion battery.

In an implementation, the coating an inner surface of a negative current collecting layer with a lithiated binding layer to obtain the negative electrode plate includes: coating the inner surface with the lithiated binding layer to obtain a to-be-treated negative electrode plate, where the lithiated binding layer is obtained by mixing binders of different lithiation degrees; placing the to-be-treated negative electrode plate between a positive plate and a negative plate of a planar electrode, where the negative current collecting layer is oriented toward the positive plate of the planar electrode, and the lithiated binding layer is oriented toward the negative plate of the planar electrode; applying an electric field between the positive plate and the negative plate of the planar electrode, for lithium ions in the lithiated binding layer to flow close to the negative plate under the electric field, so that the lithiation degree of the side of the lithiated binding layer away from the inner surface is greater than the lithiation degree of the side of the lithiated binding layer close to the inner surface; and placing the to-be-treated negative electrode plate and the planar electrode in an oven for drying to obtain the negative electrode plate. By using this implementation, the lithiation degree of the lithiated binding layer increases gradually in the direction of moving away from the inner surface based on the electric-field inductive effect, so that the lithiated binding layer in the negative electrode plate has a conductive gradient and a binding gradient. In this case, an adhesive force between the lithiated binding layer and the negative current collecting layer is increased, which can resolve the problem of detachment in the negative electrode plate, and a lithium-conducting capability of the surface of the lithiated binding layer is improved, which can resolve the problem of a decrease in initial coulombic efficiency, thereby promoting an increase in energy density of a lithium-ion battery.

In an implementation, a distance between the positive plate and the negative plate of the planar electrode is greater than or equal to 1 cm and less than or equal to 10 cm; and a voltage of the electric field is greater than or equal to 0.1 kV and less than or equal to 10 kV. By using this implementation, the lithiated binding layer formed based on appropriate electric field parameters has an appropriate conductive gradient and binding gradient.

In an implementation, a drying temperature of the oven is greater than or equal to 70°C and less than or equal to 110°C. By using this implementation, the lithiated binding layer formed based on an appropriate drying temperature has an appropriate conductive gradient and binding gradient.

In an implementation, the coating an inner surface of a negative current collecting layer with a lithiated binding layer to obtain the negative electrode plate includes: coating the inner surface with a first binding layer; and coating a side of the first binding layer away from the inner surface with a second binding layer to obtain the lithiated binding layer including the first binding layer and the second binding layer, where a lithiation degree of the first binding layer is less than a lithiation degree of the second binding layer. By using this implementation, the lithiated binding layer has a conductive gradient and a binding gradient through layered coating. In this case, an adhesive force between the lithiated binding layer and the negative current collecting layer is increased, which can resolve the problem of detachment in the negative electrode plate, and a lithium-conducting capability of the surface of the lithiated binding layer is improved, which can resolve the problem of a decrease in initial coulombic efficiency, thereby promoting an increase in energy density of a lithium-ion battery.

In an implementation, the first binding layer has a first thickness, the second binding layer has a second thickness, the second thickness and the first thickness have a first ratio, and the first ratio is greater than or equal to 0.2 and less than or equal to 5. By using this implementation, the lithiated binding layer formed in this ratio has an appropriate conductive gradient and binding gradient.

In an implementation, the lithiation degree of the first binding layer is greater than or equal to 0. By using this implementation, the first binding layer may be an unlithiated binder or a partially lithiated binder. In this case, the formed lithiated binding layer has an appropriate conductive gradient and binding gradient.

According to a third aspect, this application provides a lithium-ion battery, including: a positive electrode plate, a separator, and the negative electrode plate according to the first aspect and the implementations thereof, where the separator is located between the positive electrode plate and the negative electrode plate.

### BRIEF DESCRIPTION OF DRAWINGS

To describe the technical solutions of the embodiments of this application more clearly, the following briefly describes the accompanying drawings required in the embodiments. Apparently, a person of ordinary skill in the art may further derive other drawings from these accompanying drawings without creative efforts.
FIG. 1 is a schematic diagram of a structure of a negative electrode plate of a lithium-ion battery;
FIG. 2 is a schematic diagram of a structure of a negative electrode plate according to an embodiment of this application;
FIG. 3 is a schematic diagram of a first concentration distribution of a negative electrode plate according to an embodiment of this application;
FIG. 4 is a schematic diagram of a second concentration distribution of a negative electrode plate according to an embodiment of this application;
FIG. 5 is a schematic diagram of a third concentration distribution of a negative electrode plate according to an embodiment of this application;
FIG. 6 is a flowchart of a method for preparing a negative electrode plate according to an embodiment of this application;
FIG. 7 is a schematic diagram of an electric-field inductive effect according to an embodiment of this application;
FIG. 8 is a flowchart of another method for preparing a negative electrode plate according to an embodiment of this application; and
FIG. 9 is a schematic diagram of a migration mechanism of lithium ions in an electrolyte.

### DESCRIPTION OF EMBODIMENTS

The following clearly describes the technical solutions of the embodiments of this application with reference to the accompanying drawings in the embodiments of this application.

In descriptions of this application, unless otherwise specified, "/" means "or". For example, A/B may indicate A or B. In this specification, "and/or" describes only an association relationship for describing associated objects and indicates that three relationships may exist. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It needs to be noted that, in this application, the word such as "example" or "for example" is used to indicate giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Terms used in implementations of this application are only used for explaining the specific embodiments of this application, but are not intended to limit this application. The embodiments of this application are described in detail below with reference to the accompanying drawings.

An electronic device in use usually requires a power supply device for power supply. Currently, various electronic devices usually use a rechargeable battery (rechargeable battery), that is, a battery that is reusable after discharge through recharging to activate active substances, as a power supply device.

A lithium-ion battery is a typical rechargeable battery, which works mainly relying on the movement of lithium ions (Li⁺) between a positive electrode and a negative electrode of the battery. During charging and discharging of the battery, lithium ions move between the two electrodes for intercalation and deintercalation. During charging, lithium ions are deintercalated from the positive electrode and intercalated into the negative electrode through an electrolyte, and then the negative electrode is in a lithium-rich state. The opposite is true for discharging.

With the development of lithium-ion batteries, a negative electrode plate of a lithium-ion battery has evolved from a carbon material to a silicon negative electrode material. The silicon negative electrode material has high capacity per gram, high volumetric specific capacity, appropriate lithium intercalation potentials, and low costs, which can increase energy density of the system of the lithium-ion battery. However, the silicon negative electrode material undergoes tremendous volume deformation during repeated deintercalation of lithium ions, causing the rupture of silicon particles and the collapse of the structure of the negative electrode plate, consequently resulting in a decrease in the capacity and cycle performance of the lithium-ion battery.

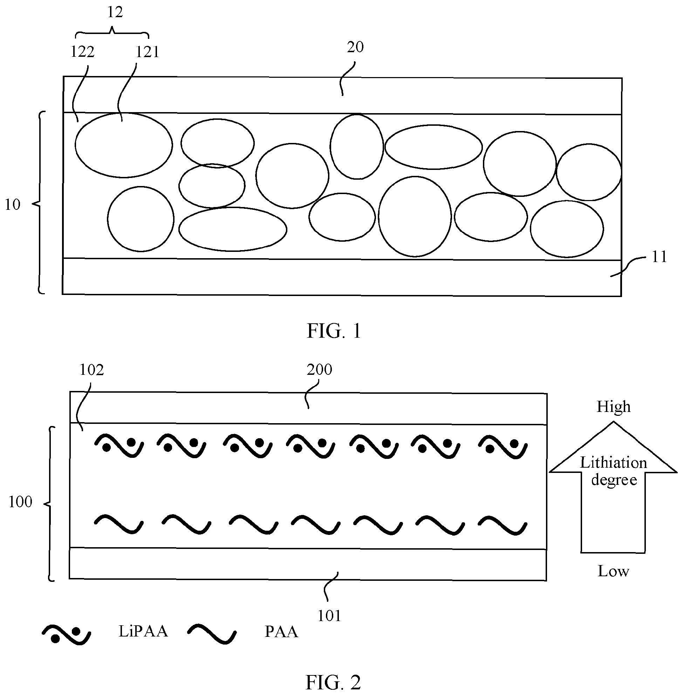

FIG. 1 is a schematic diagram of a structure of a negative electrode plate 10 of a lithium-ion battery. As shown in FIG. 1, the negative electrode plate 10 may include a current collector 11 and a negative-electrode active substance layer 12 attached to an inner surface of the current collector 11. The current collector 11 may be made of metal foil, such as copper foil or aluminum foil, for collecting currents generated by active substances 121 in the negative-electrode active substance layer 12, to form a larger current for outputting. The negative-electrode active substance layer 12 may include the active substances 121, a conductive agent (not shown in FIG. 1), and a binder 122, for increasing the energy density of the system of the negative electrode plate 10. The active substances 121 may be at least one of a graphite material, a pure silicon material, a silicon oxygen material, and a silicon carbon material. The negative electrode plate 10 may be preferably a high-silicon negative electrode containing more than 20 wt% of silicon in percentage by mass (wt%). The conductive agent may be at least one of conductive metal powder, metal fibers, metal oxides, and other carbon-based conductive materials, such as copper powder, gold powder, nickel powder, copper fibers, stainless steel fibers, carbon black, carbon fibers, carbon nanotubes, and graphite. The binder 122 may be at least one of polyvinylidene fluoride, polytetrafluoroethylene, polyamide, sodium carboxymethylcellulose, styrene butadiene rubber, polyacrylic acid, lithium carboxymethylcellulose, polyethylene oxide, and polyvinyl alcohol. The negative electrode plate 10 in this application may further include another structure, for example, a functional coating (not shown in FIG. 1) coated between the current collector 11 and the negative-electrode active substance layer 12. The functional coating may be provided for improving conductivity of the negative electrode plate. Other structures in the negative-electrode active substance layer 12 are not described in this application.

Further, as shown in FIG. 1, a separator 20 is provided on a surface of a side of the negative-electrode active substance layer 12 away from the current collector 11, and the separator 20 is provided for separating a positive electrode plate from the negative electrode plate 10, to avoid a short circuit caused by the contact between the positive electrode plate and the negative electrode plate 10. It needs to be noted herein that, the separator 20 is not an internal structure of the negative electrode plate 10, and the separator 20 is only used in the embodiments of this application to describe a relative position of the internal structure of the negative electrode plate 10.

The binder 122 may be a polymer compound for binding the active substances 121 to the current collector 11, which can bind the active substances 121 and maintain the activity of the active substances 121, and enhance the electronic contact between the active substances 121 and the conductive agent and the electronic contact between the active substances 121 and the current collector 11. In this way, the binder 122 can stabilize the structure of the negative electrode plate 10. When the negative electrode plate 10 is in the process of charging and discharging, the binder 122 can buffer volume expansion/contraction of the negative electrode plate 10, thereby preventing the collapse of the structure of the negative electrode plate 10.

Using an example in which the binder 122 is polyacrylic acid (PAA), PAA contains many carboxyl groups, which can form strong hydrogen bonding or direct bonding with functional groups on the surface of the active substances 121. The bonding enhances the binding force between the active substances 121 and the conductive agent and the binding force between the active substances 121 and the current collector 11, improving cycle performance of the silicon negative electrode material.

However, although PAA has a good binding force, there are still some problems in the use of this type of binder 122. According to a first aspect, PAA has an average lithium-conducting capability and has no low ohmic resistance, which affects a capability of fast charging and discharging of a lithium-ion battery. According to a second aspect, carboxyl groups of PAA react with lithium ions in an electrolyte, for example, Li⁺ reacts with PAA to form LiPAA, and this reaction reduces initial coulombic efficiency of the negative electrode plate 100. It needs to be noted herein that, the initial coulombic efficiency is an index for quantifying performance of a negative electrode plate of a lithium-ion battery, and is a ratio of discharge capacity to charge capacity in an initial charge-discharge cycle of the lithium-ion battery. In the process of initial charging and discharging, the coulombic efficiency usually fails to reach 100%, and there is a part of irreversible discharge capacity for the lithium-ion battery. This part of capacity affects the assembly of the lithium-ion battery. Low initial coulombic efficiency indicates a severe side reaction, which directly reduces the capacity of the lithium-ion battery and shortens the cycle life of the lithium-ion battery.

Using an example in which the binder 122 is a lithiated binder (for example, lithiated polyacrylic acid (LiPAA)), as LiPAA does not react with lithium ions in an electrolyte, this type of binder 122 does not affect the initial coulombic efficiency of the negative electrode plate 10. However, this type of binder 122 does not contain many carboxyl groups, which cannot form strong hydrogen bonding or direct bonding with functional groups on the surface of the active substances 121. In this case, this type of binder 122 has a binding force significantly lower than PAA, which cannot provide a good binding force between the active substances 121 and the conductive agent and a good binding force between the active substances 121 and the current collector 11, easily leading to detachment between the current collector 11 and the negative-electrode active substance layer 12.

In conclusion, if the binder 122 is an unlithiated binder, the impedance of the binder is high, and the initial coulombic efficiency is low; or if the binder 122 is a lithiated binder, there is a problem of detachment in the negative electrode plate 10.

To resolve the foregoing problems, an embodiment of this application provides a negative electrode plate 100.

FIG. 2 is a schematic diagram of a structure of a negative electrode plate 100 according to an embodiment of this application. As shown in FIG. 2, the negative electrode plate 100 includes: a negative current collecting layer 101, and a lithiated binding layer 102 attached to an inner surface of the negative current collecting layer 101. A lithiation degree of a side of the lithiated binding layer 102 away from the inner surface is greater than a lithiation degree of a side of the lithiated binding layer 102 close to the inner surface.

The negative current collecting layer 101 may be a current collector of a flat plate structure. The negative current collecting layer 101 may be made of metal foil, including but not limited to at least one of copper foil, aluminum foil, and titanium foil.

In some embodiments, the surface of the negative current collecting layer 101 may be coated with a functional coating, and the functional coating may be provided for improving conductivity of the negative electrode plate and improving safety of the negative electrode plate. The functional coating may include, but is not limited to, at least one of lithium iron phosphate, lithium manganese iron phosphate, lithium vanadium phosphate, lithium-manganese-rich base, artificial graphite, natural graphite, hard carbon, soft carbon, intermediate-phase carbon microspheres, carbon nanotubes, graphene, carbon fibers, vapor-grown carbon fibers, activated carbon, porous carbon, acetylene black, Ketjen black, conductive ink, thermally-expandable microspheres, polyethylene, polyamide, polybutadiene, ethylene ethyl acrylate, ethylene vinyl acetate copolymer, fluorinated ethylene propylene copolymer, polyethylene terephthalate, polypyrrole and derivatives thereof, polyvinylidene fluoride, polytetrafluoroethylene, polyamide, sodium carboxymethylcellulose, and styrene butadiene rubber. The inner surface of the negative current collecting layer 101 may be coated with the lithiated binding layer 102. Active substances and a conductive agent may be mixed in the lithiated binding layer 102 to be used as an active substance layer of the negative electrode plate 100. For example, the lithiated binding layer 102, the active substances, and the conductive agent may be mixed to form a slurry, and the inner surface of the negative current collecting layer 101 is coated with the slurry, for subsequent treatment.

The lithiated binding layer 102 is formed by a binder. The binder may be at least one of polyvinylidene fluoride, polytetrafluoroethylene, polyamide, sodium carboxymethylcellulose, styrene butadiene rubber, polyacrylic acid, lithium carboxymethylcellulose, polyethylene oxide, and polyvinyl alcohol. The active substances may be at least one of a graphite material, a pure silicon material, a silicon oxygen material, and a silicon carbon material. The negative electrode plate 100 may be preferably a high-silicon negative electrode containing more than 20 wt% of silicon in percentage by mass. The conductive agent may be at least one of conductive metal powder, metal fibers, metal oxides, and other carbon-based conductive materials, such as copper powder, gold powder, nickel powder, copper fibers, stainless steel fibers, carbon black, carbon fibers, carbon nanotubes, and graphite.

The embodiments of this application only describe a specific structure of the lithiated binding layer 102, but do not describe the active substances and the conductive agent.

Further, as shown in FIG. 2, a separator 200 is provided on a surface of a side of the lithiated binding layer 102 away from the negative current collecting layer 101, and the separator 200 is provided for separating a positive electrode plate from the negative electrode plate 100, to avoid a short circuit caused by the contact between the positive electrode plate and the negative electrode plate 100. It needs to be noted herein that, the separator 200 is not an internal structure of the negative electrode plate 100, and the separator 200 is only used in the embodiments of this application to describe a relative position of the internal structure of the negative electrode plate 100.

It needs to be noted herein that, if the surface of the negative current collecting layer 101 is coated with a functional coating, the functional coating is provided between the negative current collecting layer 101 and the lithiated binding layer 102.

In some embodiments, the lithiated binding layer 102 may include lithiated binders of different lithiation degrees, for example, including a binder Liₐ-Binder of a lithiation degree a and a binder Li_{b}-Binder of a lithiation degree b. Liₐ-Binder may be located in a region of the lithiated binding layer 102 close to the inner surface of the negative current collecting layer 101. Li_{b}-Binder may be located in a region of the lithiated binding layer 102 away from the inner surface of the negative current collecting layer 101. The lithiation degree of Li_{b}-Binder is greater than the lithiation degree of Liₐ-Binder. In other words, a and b meet the following relationship: 0 ≤ a/b < 1. Liₐ-Binder indicates that a ratio of lithium ions to binder polymer repeating units is a:1. Correspondingly, Li_{b}-Binder indicates that a ratio of lithium ions to binder polymer repeating units is b:1.

For example, the lithiated binding layer 102 may include PAA binders of different lithiation degrees, for example, including a PAA binder LiₐPAA of a lithiation degree a and a PAA binder Li_{b}PAA of a lithiation degree b. PAA is a water-soluble polymer, and Li_{b}PAA indicates that, for the PAA polymer molecules, a ratio of lithium ions to polymer repeating acrylic units is b:1.

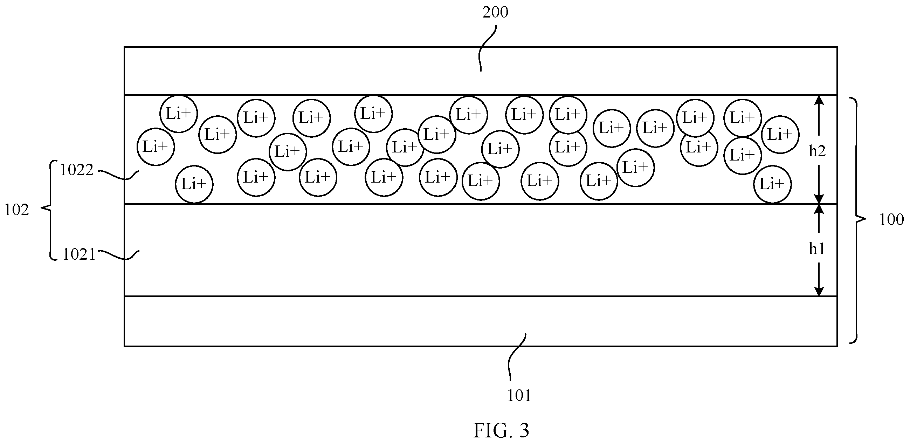

For example, when a is equal to 0.2 and b is equal to 0.5, in the lithiated binding layer 102, a region close to the inner surface of the negative current collecting layer 101 includes Li_{0.2}PAA, and a region away from the inner surface of the negative current collecting layer 101 includes Li_{0.5}PAA. When a is equal to 0 and b is equal to 1, in the lithiated binding layer 102, a region close to the inner surface of the negative current collecting layer 101 includes PAA, and a region away from the inner surface of the negative current collecting layer 101 includes LiPAA. In other words, the lithiated binding layer 102 has a gradient distribution of binders, and this gradient distribution may be a gradient distribution of lithiated binders of different lithiation degrees, such as Li_{0.2}PAA and Li_{0.5}PAA, or may be a gradient distribution of a lithiated binder and an unlithiated binder, such as PAA and LiPAA. Only PAA and LiPAA are used as an example in FIG. 2. In this way, the lithiated binding layer 102 in the negative electrode plate 100 has a conductive gradient and a binding gradient through a gradient distribution of lithiation degrees in the lithiated binding layer 102. FIG. 3 is a schematic diagram of a first concentration distribution of a negative electrode plate 100 according to an embodiment of this application. As shown in FIG. 3, in some embodiments, the lithiated binding layer 102 includes a first binding layer 1021 close to the inner surface of the negative current collecting layer 101 and a second binding layer 1022 away from the inner surface of the negative current collecting layer 101. A lithiation degree of the first binding layer 1021 is less than a lithiation degree of the second binding layer 1022, and the first binding layer 1021 and the second binding layer 1022 are obtained sequentially through coating on the inner surface of the negative current collecting layer 101. In this case, the lithiated binding layer 102 has two different lithiation degrees to form a lithiation degree gradient.

In some embodiments, the first binding layer 1021 has a first thickness h1, the second binding layer 1022 has a second thickness h2, the second thickness h2 and the first thickness h1 have a first ratio k, and the first ratio k is greater than or equal to 0.2 and less than or equal to 5, that is, h1, h2, and k meet the following relationship: h2/h1 = k (kε[0.2,5]). In this way, the lithiated binding layer 102 formed based on this thickness relationship has an appropriate conductive gradient and binding gradient.

In some embodiments, the lithiation degree of the first binding layer 1021 may be greater than or equal to 0. In other words, the first binding layer 1021 may be an unlithiated binder or a partially lithiated binder.

The first binding layer 1021 may be LiₐPAA, and the second binding layer 1022 may be Li_{b}PAA.

For example, when a is equal to 0.2 and b is equal to 0.5, the first binding layer 1021 is Li_{0.2}PAA, and the second binding layer 1022 is Li_{0.5}PAA. When a is equal to 0 and b is equal to 0.5, the first binding layer 1021 is PAA, and the second binding layer 1022 is Li_{0.5}PAA. In other words, the lithiated binding layer 102 has a gradient distribution of binders, and this gradient distribution may be a gradient distribution of two lithiated binders of different lithiation degrees, such as Li_{0.2}PAA and Li_{0.5}PAA, or may be a gradient distribution of a lithiated binder and an unlithiated binder, such as PAA and Li_{0.5}PAA. In this way, the lithiated binding layer 102 in the negative electrode plate 100 has a conductive gradient and a binding gradient through a gradient distribution of lithiation degrees in the lithiated binding layer 102.

It needs to be noted herein that, the values of a and b in the foregoing embodiments are only used as examples for description. The values of a and b are not limited in the embodiments of this application. Preferably, a is equal to 0 and b is equal to 1. In this case, the first binding layer 1021 is PAA, which is a binder that does not contain lithium ions and has a strong binding capability, and the second binding layer 1022 is LiPAA, which is a binder with a high lithiation degree and a strong conductive capability.

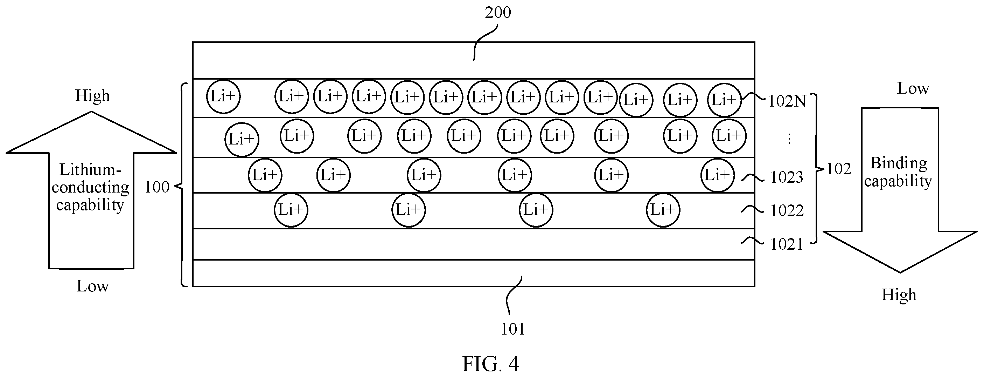

FIG. 4 is a schematic diagram of a second concentration distribution of a negative electrode plate 100 according to an embodiment of this application. As shown in FIG. 4, in some embodiments, the lithiation degree of the lithiated binding layer 102 increases gradually in the direction of moving away from the inner surface of the negative current collecting layer 101, forming a structure with a gradient change in the lithiation degree.

In some embodiments, the lithiated binding layer 102 may include more structures of binding layers, such as a third binding layer 1023, ..., and an N^{th} binding layer 102N (N ≥ 2). The first binding layer 1021 to the N^{th} binding layer 102N are obtained sequentially through coating on the inner surface of the negative current collecting layer 101 in the direction of moving away from the negative current collecting layer 101. In this case, the lithiated binding layer 102 may have multiple different lithiation degrees to form a lithiation degree gradient.

For example, the first binding layer 1021, the second binding layer 1022, the third binding layer 1023, ..., and the N^{th} binding layer 102N may be sequentially LiₐPAA, Li_{b}PAA, Li_{c}PAA, ..., and LiₙPAA (0 ≤ a < b < c < ... < n < 1). In this case, in the direction of moving away from the inner surface, the lithiated binding layer 102 has a gradually improved lithium-conducting capability and a gradually reduced adhesive force, so that the lithiated binding layer 102 has a conductive gradient and a binding gradient.

It needs to be noted herein that, in the foregoing embodiments, the first binding layer 1021 to the N^{th} binding layer that are of multiple different lithiation degrees may be obtained sequentially through coating, so that there are clear gradient boundaries.

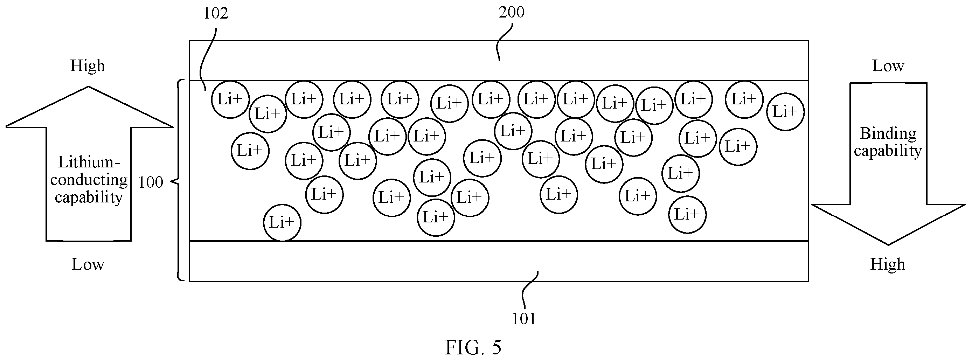

FIG. 5 is a schematic diagram of a third concentration distribution of a negative electrode plate 100 according to an embodiment of this application. As shown in FIG. 5, in some embodiments, the lithiation degree of the lithiated binding layer 102 increases gradually in the direction of moving away from the inner surface of the negative current collecting layer 101, forming a structure with lithium ions of a gradual concentration.

In some embodiments, the lithiated binding layer 102 includes two lithiated binders of different lithiation degrees, and the two lithiated binders of different lithiation degrees have different mixing ratios in the direction of moving away from the inner surface of the negative current collecting layer 101, so that the lithiation degree of the lithiated binding layer 102 increases gradually, forming a structure with lithium ions of a gradual concentration.

For example, the lithiated binding layer 102 may include two binders LiPAA and PAA of different lithiation degrees, the two binders are mixed and distributed in different ratios in the direction of moving away from the inner surface of the negative current collecting layer 101, and a mixing ratio of LiPAA to PAA increases gradually. If a thickness of the lithiated binding layer 102 is 100 µm, a ratio of LiPAA to PAA is 0.4-0.5 in a region of a thickness 80-100 µm, and a ratio of LiPAA to PAA is 0.3-0.4 in a region of a thickness 60-80 µm. In this case, LiPAA has a gradual concentration, the gradual concentration of LiPAA provides a conductive gradient, PAA has a gradual concentration, and the gradual concentration of PAA provides a binding gradient, so that the lithiated binding layer 102 has both the conductive gradient and the binding gradient.

It needs to be noted herein that, in the foregoing embodiments, the lithiated binding layer of two different lithiation degrees may be obtained based on an electric-field inductive effect, and therefore has a gradual distribution in different mixing ratios with no clear gradient boundaries.

In some embodiments, the lithiated binding layer 102 includes multiple binders of different lithiation degrees, and the multiple binders of different lithiation degrees are mixed and distributed in different ratios in the direction of moving away from the inner surface of the negative current collecting layer 101.

For example, the lithiated binding layer 102 may include LiₐPAA, Li_{b}PAA, Li_{c}PAA, ..., and LiₙPAA (0 ≤ a < b < c < ... < n < 1). For example, when a is equal to 0.2, b is equal to 0.3, c is equal to 0.4, and n is equal to 0.5, Li_{0.2}PAA, Li_{0.3}PAA, Li_{0.4}PAA, and Li_{0.5}PAA are distributed sequentially in the lithiated binding layer 102 in the direction of moving away from the inner surface. In other words, the binders in the lithiated binding layer 102 are distributed in a gradual concentration. In this way, the lithiated binding layer 102 in the negative electrode plate 100 has a conductive gradient and a binding gradient through the distribution of lithiation degrees in the lithiated binding layer 102 in the gradual concentration.

It needs to be noted herein that, in the foregoing embodiments, the lithiated binding layer 102 of multiple different lithiation degrees may be obtained based on an electric-field inductive effect. For example, when an electric field is applied, lithium ions migrate under the action of the electric field in the direction of moving away from the negative current collecting layer 101, to increase the lithiation degree gradually. In this case, in the direction of moving away from the inner surface, the lithiated binding layer 102 has a gradually improved lithium-conducting capability and a gradually reduced adhesive force. The lithiated binding layer 102 has a gradual conductive capability and a gradual binding capability, with no clear gradient boundaries.

Based on the structure of the negative electrode plate 100 in the foregoing embodiments, as the lithiated binding layer 102 has a conductive gradient, lithium-ion conductivity of the side of the lithiated binding layer 102 away from the inner surface of the negative current collecting layer 100 is greater than lithium-ion conductivity of the side of the lithiated binding layer 102 close to the inner surface.

Using the negative electrode plate 100 shown in the schematic diagram of the first gradient distribution as an example, lithium-ion conductivity σ2 of the second binding layer 1022 is greater than lithium-ion conductivity σ1 of the first binding layer 1021, that is, σ2 and σ1 meet the following relationship: σ2/σ1 > 1.

It needs to be noted herein that, the negative electrode plate 100 shown in the schematic diagram of the first gradient distribution is only used as an example for description. In another structure of the negative electrode plate 100, lithium-ion conductivity σ2 of the side of the lithiated binding layer 102 away from the inner surface is greater than lithium-ion conductivity σ1 of the side of the lithiated binding layer 102 close to the inner surface. In other words, in any negative electrode plate 100 in the embodiments of this application, σ2 and σ1 meet the following relationship: σ2/σ1 > 1.

Based on the structure of the negative electrode plate 100 in the foregoing embodiments, as the lithiated binding layer 102 has a binding gradient, an adhesive force of the side of the lithiated binding layer 102 away from the inner surface is less than an adhesive force of the side of the lithiated binding layer 102 close to the inner surface.

Using the negative electrode plate 100 shown in the schematic diagram of the first gradient distribution as an example, an adhesive force s2 of the second binding layer 1022 is less than an adhesive force s1 of the first binding layer 1021, that is, s2 and s1 meet the following relationship: s2/s1 < 1.

It needs to be noted herein that, the negative electrode plate 100 shown in the schematic diagram of the first gradient distribution is only used as an example for description. In another structure of the negative electrode plate 100, an adhesive force s2 of the side of the lithiated binding layer 102 away from the inner surface is less than an adhesive force s1 of the side of the lithiated binding layer 102 close to the inner surface. In other words, in any negative electrode plate 100 in the embodiments of this application, s2 and s1 meet the following relationship: s2/s1 < 1.

The lithiated binding layer 102 in the negative electrode plate 100 according to this application has a conductive gradient and a binding gradient through a gradient distribution of lithiation degrees in the lithiated binding layer 102. In this way, the problem of detachment in a negative electrode plate with a conventional binder can be resolved, a rate of battery kinetics is increased, and initial coulombic efficiency of a lithium-ion battery is increased, increasing capacity of a lithium-ion battery.

This application provides a method for preparing the negative electrode plate 100.

The method for preparing the negative electrode plate 100 in the embodiments of this application includes step S100.

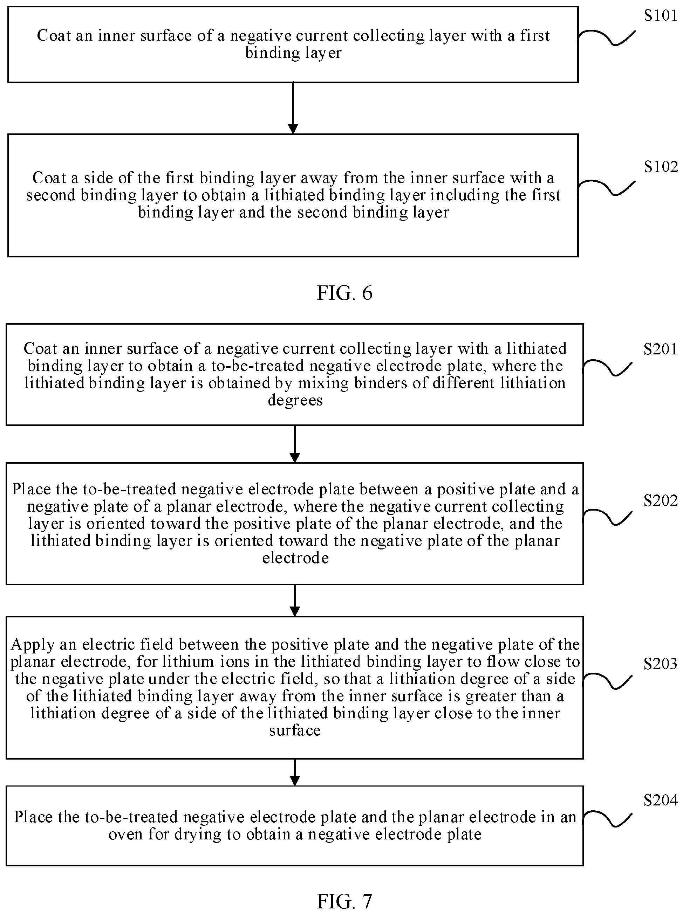

Step S100: Coat an inner surface of a negative current collecting layer 101 with a lithiated binding layer 102 to obtain the negative electrode plate 100, where a lithiation degree of a side of the lithiated binding layer 102 away from the inner surface is greater than a lithiation degree of a side of the lithiated binding layer 102 close to the inner surface. FIG. 6 is a flowchart of a method for preparing a negative electrode plate 100 according to an embodiment of this application. As shown in FIG. 6, step 100 may be further implemented through the following steps S101 and S102.

Step S101: Coat the inner surface of the negative current collecting layer 101 with a first binding layer 1021.

The first binding layer 1021 may be obtained by mixing a binder, active substances, and a conductive agent to form a slurry and coating the inner surface of the negative current collecting layer 101 with the slurry. The active substances and the conductive agent are not described in the embodiments of this application.

In some embodiments, the lithiation degree of the first binding layer 1021 may be greater than or equal to 0. In other words, the first binding layer 1021 may be an unlithiated binder or a partially lithiated binder.

For example, the first binding layer 1021 may be an unlithiated binder PAA. In this case, the first binding layer 1021 has a strong binding capability.

It needs to be noted herein that, the first binding layer 1021 may alternatively be a lithiated binder of another lithiation degree, for example, Li_{0.2}PAA. The lithiation degree of the first binding layer 1021 is not limited in the embodiments of this application.

Step S102: Coat a side of the first binding layer 1021 away from the inner surface of the negative current collecting layer 101 with a second binding layer 1022 to obtain the lithiated binding layer 102 including the first binding layer 1021 and the second binding layer 1022.

A lithiation degree of the first binding layer 1021 is less than a lithiation degree of the second binding layer 1022.

For example, the second binding layer 1022 is LiPAA. In this case, the second binding layer 1022 has a strong conductive capability.

In some embodiments, the first binding layer 1021 has a first thickness h1, the second binding layer 1022 has a second thickness h2, the second thickness h2 and the first thickness h1 have a first ratio k, and the first ratio k is greater than or equal to 0.2 and less than or equal to 5, that is, h1, h2, and k meet the following relationship: h2/h1 = k (kε[0.2,5]). In this way, the lithiated binding layer 102 formed based on this thickness relationship has an appropriate conductive gradient and binding gradient.

In the foregoing embodiment, the negative electrode plate 100 is prepared through layered coating. The negative current collecting layer 101 is coated directly with two binders of different lithiation degrees in layers, which can quickly form a conductive gradient and a binding gradient in the lithiated binding layer 102. In some embodiments, the lithiated binding layer 102 may include more structures of binding layers, such as a third binding layer 1023, a fourth binding layer 1024, ..., and an N^{th} binding layer 102N. The third binding layer 1023 to the N^{th} binding layer 102N are provided between the first binding layer 1021 and the second binding layer 1022. In this case, the lithiated binding layer 102 may have multiple different lithiation degrees to form a lithiation degree gradient.

In the foregoing embodiment, the negative electrode plate 100 may be prepared through layered coating. For example, the inner surface of the negative current collecting layer 101 is coated with the first binding layer 1021 to the N^{th} binding layer that are of multiple different lithiation degrees sequentially. In this case, there are clear gradient boundaries among the first binding layer 1021 to the N^{th} binding layer, which can quickly form a conductive gradient and a binding gradient in the lithiated binding layer 102.

It needs to be noted herein that, the structure in the foregoing embodiments may be, but is not limited to, prepared through layered coating, or may be prepared based on an electric-field inductive effect.

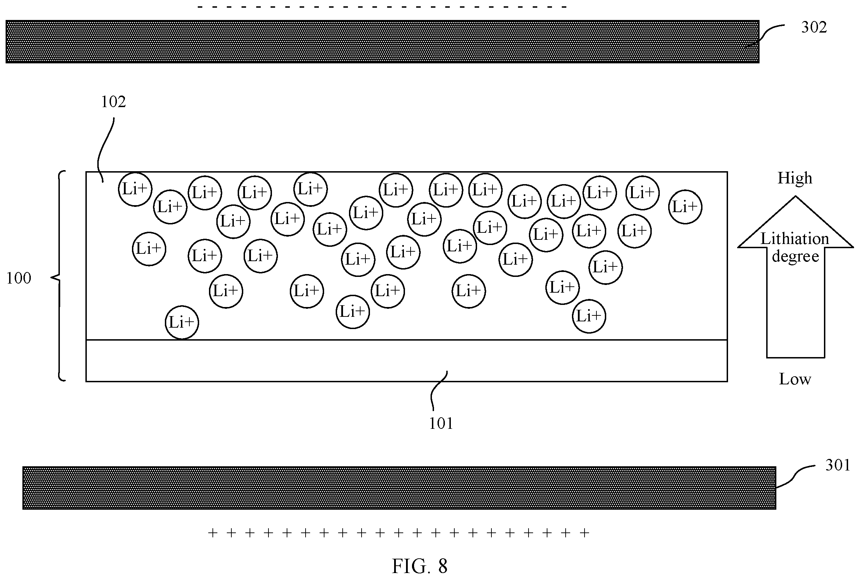

FIG. 7 is a flowchart of another method for preparing a negative electrode plate 100 according to an embodiment of this application. FIG. 8 is a schematic diagram of an electric-field inductive effect according to an embodiment of this application. As shown in FIG. 7 and FIG. 8, step S100 is implemented through the following steps S201 to S204.

Step S201: Coat the inner surface of the negative current collecting layer 101 with the lithiated binding layer 102 to obtain a to-be-treated negative electrode plate, where the lithiated binding layer 102 is obtained by mixing binders of different lithiation degrees.

In some embodiments, the lithiated binding layer 102 is obtained by mixing two binders of different lithiation degrees, for example, obtained by mixing LiPAA and PAA. A mixing ratio of the two binders of different lithiation degrees is not limited in the embodiments of this application.

In some embodiments, the lithiated binding layer 102 is obtained by mixing multiple binders of different lithiation degrees, for example, the lithiated binding layer 102 is obtained by mixing LiₐPAA, Li_{b}PAA, Li_{c}PAA, ..., and LiₙPAA (0 ≤ a < b < c < ... < n < 1). A mixing ratio of the multiple binders of different lithiation degrees is not limited in the embodiments of this application.

Step S202: Place the to-be-treated negative electrode plate between a positive plate 301 and a negative plate 302 of a planar electrode, where the negative current collecting layer 101 is oriented toward the positive plate 301 of the planar electrode, and the lithiated binding layer 102 is oriented toward the negative plate 302 of the planar electrode.

As lithium ions are monovalent cations, the lithium ions can migrate toward the negative plate 302 of the planar electrode. Based on this, the negative current collecting layer 101 is oriented toward the positive plate 301 of the planar electrode, and the lithiated binding layer 102 is oriented toward the negative plate 302 of the planar electrode.

Step S203: Apply an electric field between the positive plate 301 and the negative plate 302 of the planar electrode, for lithium ions in the lithiated binding layer 102 to flow close to the negative plate 302 under the electric field, so that the lithiation degree of the side of the lithiated binding layer 102 away from the inner surface of the negative current collecting layer 101 is greater than the lithiation degree of the side of the lithiated binding layer close to the inner surface of the negative current collecting layer 101.

After the electric field is applied between the positive plate 301 and the negative plate 302 of the planar electrode, the lithium ions can complete the migration toward the negative plate 302, forming a conductive gradient and a binding gradient in the lithiated binding layer 102.

In some embodiments, the lithiated binding layer 102 is obtained by mixing two binders of different lithiation degrees, the two binders are mixed and distributed in different ratios in the direction of moving away from the inner surface of the negative current collecting layer 101, and a mixing ratio of LiPAA to PAA increases gradually. In this case, after the electric field is applied, the lithium ions can complete the migration toward the negative plate 302, so that in the direction of moving away from the negative current collecting layer 101, the lithiation degree increases gradually, the lithium-conducting capability of the lithiated binding layer 102 increases gradually, and the binding capability decreases gradually, forming a conductive gradient and a binding gradient.

In some embodiments, the lithiated binding layer 102 is obtained by mixing multiple binders of different lithiation degrees, and the multiple binders are mixed and distributed in different ratios in the direction of moving away from the inner surface of the negative current collecting layer 101. In this case, after the electric field is applied, in the direction of moving away from the negative current collecting layer 101, the lithiation degree increases gradually, the lithium-conducting capability of the lithiated binding layer 102 increases gradually, and the binding capability decreases gradually, forming a conductive gradient and a binding gradient.

In some embodiments, a distance between the positive plate 301 and the negative plate 302 of the planar electrode is greater than or equal to 1 cm and less than or equal to 10 cm.

In some embodiments, a voltage of the electric field is greater than or equal to 0.1 kV and less than or equal to 10 kV.

It needs to be noted herein that, the electric field setting parameters in the embodiments of this application are only used as examples for description, and may be adjusted as required in a specific implementation process.

Step S204: Place the to-be-treated negative electrode plate and the planar electrode in an oven for drying to obtain the negative electrode plate 100.

The binder in the lithiated binding layer 102 is a slurry, which needs to be dried to obtain the negative electrode plate 100.

In some embodiments, a drying temperature of the oven is 110°C.

It needs to be noted herein that, the drying temperature in the embodiments of this application is only used as an example for description, and may be adjusted as required in a specific implementation process.

In this embodiment, the negative electrode plate 100 is prepared based on an electric-field inductive effect. A gradient distribution of the lithiation degree is completed in this process. It needs to be noted herein that, the mechanism of migration of lithium ions in this embodiment is different from a mechanism of migration of lithium ions in an electrolyte.

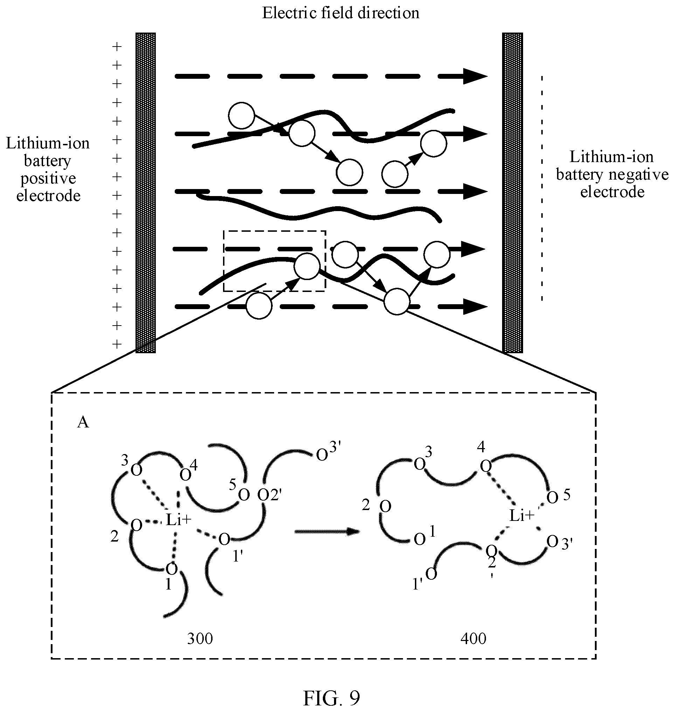

FIG. 9 is a schematic diagram of a migration mechanism of lithium ions in an electrolyte. As shown in FIG. 9, using an example in which the electrolyte is a solvent-free polymer polyethylene oxide (PEO), lithium ions undergo the "decomplexation-recomplexation" reaction in chain segmental relaxation of an amorphous fraction in the polymer, and this reaction is repeated, so that the lithium ions implement migration. The complexation is carried out through coordinate bonding of positive ions or neutral molecules with a specific quantity of nuclei or negative ions. Stable complicated ions or molecules are referred to as complex ions. A compound containing complex ions is referred to as a complex. A reaction in which complex ions or a complex is formed is the complexation. The region A in FIG. 9 shows a specific process of "decomplexation-recomplexation" between the lithium ions and the polymer. The electrolyte contains a complex formed from the lithium ions and the polymer. Lithium ions (Li⁺) in the complex undergo the decomplexation with the surrounding oxygen atoms O1, O2, O3, O4, and O1' as in a first process 300 to be removed from these oxygen atoms, and are then combined with O4, O5, O2', and O3' to undergo the recomplexation as in a second process 400.

It needs to be noted herein that, O5, O2', and O3' in the first process 300 are atoms that do not react with Li⁺, and O1, O2, O3, and O1' in the second process 400 are atoms that do not react with Li⁺.

In this embodiment, using a mixture of LiPAA and PAA as an example, the mixture can implement conversion through thermal motion between lithium ions and protons, and lithium ions undergo orientational motion due to electrostatic attraction when an electric field is applied, and lithium ions exchange with protons through free chain segmental relaxation of the polymer to implement orientational migration of the lithium ions. Based on this, a gradient distribution of LiPAA and PAA is implemented based on the electric-field inductive effect. In this case, a gradual gradient formed in LiPAA provides a conductive gradient, and a gradual gradient formed in PAA provides a binding gradient, so that the lithiated binding layer 102 has both the conductive gradient and the binding gradient. The conductive gradient improves lithium-ion transport performance, and the binding gradient resolves the problem of detachment, improving cycle stability of a lithium-ion battery.

By using the method for preparing the negative electrode plate in the embodiments of this application, the lithiated binding layer in the negative electrode plate 100 has a conductive gradient and a binding gradient through a gradient distribution of lithiation degrees in the lithiated binding layer 102. In this case, an adhesive force in the lithiated binding layer 100 is increased, which can resolve the problem of detachment in the negative electrode plate 100, and a lithium-conducting capability in the lithiated binding layer 102 is improved, which can resolve the problem of a decrease in initial coulombic efficiency, thereby promoting an increase in energy density of a lithium-ion battery.

This application further provides a lithium-ion battery. The lithium-ion battery includes a positive electrode plate, a separator 200, and the negative electrode plate 100 in the foregoing embodiments. The separator 200 is located between the positive electrode plate and the negative electrode plate 100. In this way, the separator 200 can separate the positive electrode plate from the negative electrode plate 100, avoiding a short circuit caused by the contact between the positive electrode plate and the negative electrode plate 100.

In some embodiments, the lithium-ion battery further includes a housing, and the housing is filled with an electrolyte. The positive electrode plate, the separator 200, and the negative electrode plate 100 are provided inside the housing. The positive electrode plate, the separator 200, and the negative electrode plate 100 are immersed in the electrolyte.

In some embodiments, the electrolyte includes a solvent and a lithium salt. The solvent is at least one of ethylene carbonate, propylene carbonate, dimethyl carbonate, ethyl methyl carbonate, propyl propionate, and ethyl propionate. The lithium salt may be at least one of lithium hexafluorophosphate, lithium bis(oxalate) borate, lithium difluoro(oxalato)borate, lithium bisdifluorosulfonimide, and lithium bis(trifluoromethanesulphonyl)imide.

In some embodiments, the positive electrode plate may include a positive-electrode current collector and a positive-electrode active substance layer attached to a surface of the positive-electrode current collector. Active substances in the positive-electrode active substance layer may be at least one of lithium cobaltate, lithium iron phosphate, sodium iron phosphate, lithium manganese iron phosphate, lithium vanadium phosphate, sodium vanadium phosphate, lithium vanadyl phosphate, sodium vanadyl phosphate, lithium vanadate, lithium nickelate, lithium manganate, lithium nickel cobalt manganate, lithium nickel cobalt aluminate, lithium titanate, and lithium-manganese-rich materials.

In the lithium-ion battery in this application, the lithiated binding layer in the negative electrode plate 100 has a conductive gradient and a binding gradient through a gradient distribution of lithiation degrees in the negative electrode plate 100. In this case, an adhesive force between the lithiated binding layer and the current collector is increased, which can resolve the problem of detachment in the negative electrode plate, and a lithium-conducting capability of the surface of the lithiated binding layer is improved, and a rate of interface lithium-conducting kinetics is increased, which can resolve the problem of a decrease in initial coulombic efficiency, thereby promoting an increase in energy density of the lithium-ion battery. The lithium-ion battery in the embodiments of this application has high energy density.

This application further provides an electronic device. The electronic device includes an electrical element and the lithium-ion battery according to the foregoing embodiment. The lithium-ion battery may be electrically connected to the electrical element.

In this application, a type of the electronic device includes, but is not limited to, a mobile phone, a tablet computer, a notebook computer, a large-screen device (such as a smart TV or a smart screen), a personal computer (persona1computer, PC), a handheld computer, a netbook, a personal digital assistant (personal digital assistant, PDA), a wearable electronic device, an onboard device, and a virtual reality device. The electronic device may also be a wireless charging electric vehicle, a wireless charging household appliance, an unmanned aircraft, and another electronic product.

In the electronic device in this application, the lithiated binding layer in the negative electrode plate 100 has a conductive gradient and a binding gradient through a gradient distribution of lithiation degrees in the negative electrode plate 100 of the lithium-ion battery. In this case, an adhesive force in the lithiated binding layer is increased, which can resolve the problem of detachment in the negative electrode plate, and a lithium-conducting capability in the lithiated binding layer is improved, which can resolve the problem of a decrease in initial coulombic efficiency, thereby promoting an increase in energy density of a lithium-ion battery. The electronic device in the embodiments of this application has a long battery life.

It needs to be noted that, in this specification, the term "include", "comprise", or any other variant thereof is intended to cover a non-exclusive inclusion, so that a process, a method, an object, or a device that includes a series of elements not only includes such elements, but also includes other elements not expressly listed, or further includes elements inherent to such process, method, object, or device.

A person skilled in the art can easily figure out another implementation of this application after considering the specification and practicing the disclosed application. This application is intended to cover any variations, uses, or adaptive changes of this application. These variations, uses, or adaptive changes follow the general principles of this application and include common general knowledge or common technical means in the art, which are not disclosed in this application. The specification and the embodiments are considered as merely exemplary, and the scope and spirit of this application are pointed out in the following claims.

It should be understood that this application is not limited to the precise structures described above and shown in the accompanying drawings, and various modifications and changes can be made without departing from the scope of this application. The scope of this application is subject only to the appended claims.

## Claims

1. A negative electrode plate, comprising:
a negative current collecting layer; and
a lithiated binding layer, attached to an inner surface of the negative current collecting layer, wherein
a lithiation degree of a side of the lithiated binding layer away from the inner surface is greater than a lithiation degree of a side of the lithiated binding layer close to the inner surface.

2. The negative electrode plate according to claim 1, wherein
a lithiation degree of the lithiated binding layer increases gradually in the direction of moving away from the inner surface; and
the lithiated binding layer is obtained based on an electric-field inductive effect.

3. The negative electrode plate according to claim 1, wherein
the lithiated binding layer comprises a first binding layer close to the inner surface and a second binding layer away from the inner surface; and a lithiation degree of the first binding layer is less than a lithiation degree of the second binding layer, and the first binding layer and the second binding layer are obtained sequentially through coating on the inner surface of the negative current collecting layer.

4. The negative electrode plate according to claim 3, wherein
the first binding layer has a first thickness, the second binding layer has a second thickness, the second thickness and the first thickness have a first ratio, and the first ratio is greater than or equal to 0.2 and less than or equal to 5.

5. The negative electrode plate according to claim 3, wherein
the lithiation degree of the first binding layer is greater than or equal to 0.

6. The negative electrode plate according to claim 1, wherein
lithium-ion conductivity of the side of the lithiated binding layer away from the inner surface is greater than lithium-ion conductivity of the side of the lithiated binding layer close to the inner surface.

7. The negative electrode plate according to claim 1, wherein
an adhesive force of the side of the lithiated binding layer away from the inner surface is less than an adhesive force of the side of the lithiated binding layer close to the inner surface.

8. A method for preparing a negative electrode plate, comprising:
coating an inner surface of a negative current collecting layer with a lithiated binding layer to obtain the negative electrode plate, wherein
a lithiation degree of a side of the lithiated binding layer away from the inner surface is greater than a lithiation degree of a side of the lithiated binding layer close to the inner surface.

9. The method for preparing the negative electrode plate according to claim 8, wherein the coating an inner surface of a negative current collecting layer with a lithiated binding layer to obtain the negative electrode plate comprises:
coating the inner surface with the lithiated binding layer to obtain a to-be-treated negative electrode plate, wherein the lithiated binding layer is obtained by mixing binders of different lithiation degrees;
placing the to-be-treated negative electrode plate between a positive plate and a negative plate of a planar electrode, wherein the negative current collecting layer is oriented toward the positive plate of the planar electrode, and the lithiated binding layer is oriented toward the negative plate of the planar electrode;
applying an electric field between the positive plate and the negative plate of the planar electrode, for lithium ions in the lithiated binding layer to flow close to the negative plate under the electric field, so that the lithiation degree of the side of the lithiated binding layer away from the inner surface is greater than the lithiation degree of the side of the lithiated binding layer close to the inner surface; and
placing the to-be-treated negative electrode plate and the planar electrode in an oven for drying to obtain the negative electrode plate.

10. The method for preparing the negative electrode plate according to claim 9, wherein
a distance between the positive plate and the negative plate of the planar electrode is greater than or equal to 1 cm and less than or equal to 10 cm; and
a voltage of the electric field is greater than or equal to 0.1 kV and less than or equal to 10 kV.

11. The method for preparing the negative electrode plate according to claim 9, wherein
a drying temperature of the oven is greater than or equal to 70°C and less than or equal to 110°C.

12. The method for preparing the negative electrode plate according to claim 8, wherein the coating an inner surface of a negative current collecting layer with a lithiated binding layer to obtain the negative electrode plate comprises:
coating the inner surface with a first binding layer; and
coating a side of the first binding layer away from the inner surface with a second binding layer to obtain the lithiated binding layer comprising the first binding layer and the second binding layer, wherein
a lithiation degree of the first binding layer is less than a lithiation degree of the second binding layer.

13. The method for preparing the negative electrode plate according to claim 12, wherein
the first binding layer has a first thickness, the second binding layer has a second thickness, the second thickness and the first thickness have a first ratio, and the first ratio is greater than or equal to 0.2 and less than or equal to 5.

14. The method for preparing the negative electrode plate according to claim 12, wherein
the lithiation degree of the first binding layer is greater than or equal to 0.

15. A lithium-ion battery, comprising: a positive electrode plate, a separator, and the negative electrode plate according to any one of claims 1 to 7, wherein the separator is located between the positive electrode plate and the negative electrode plate.
